# FASCICULE DE BREVET EUROPEEN

(11) **EP 2 852 495 B1**
(45) Date de publication et mention de la délivrance du brevet: **21.08.2024**
(21) Numéro de dépôt: 13729972.3
(22) Date de dépôt: 16.05.2013
(51) Int. Cl.: B32B 17/10

(54) **INTERCALAIRE PLASTIQUE VISCOELASTIQUE POUR UN AMORTISSEMENT VIBRO-ACOUSTIQUE ET VITRAGE COMPRENANT UN TEL INTERCALAIRE**
VISKOELASTISCHE KUNSTSTOFFZWISCHENSCHICHT FÜR VIBROAKUSTISCHE DÄMPFUNG UND VERGLASUNGSEINHEIT MIT SOLCH EINER ZWISCHENSCHICHT
VISCOELASTIC PLASTIC INTERLAYER FOR VIBROACOUSTIC DAMPING AND GLAZING UNIT COMPRISING SUCH AN INTERLAYER

(30) Priorité: 22.05.2012 FR 1254636
(43) Date de publication de la demande: 01.04.2015
(60) Demande divisionnaire: 23208329.5
(73) Titulaire: SAINT-GOBAIN GLASS FRANCE, 92400 Courbevoie (FR)
(72) Inventeur: REHFELD, Marc, 95460 Ezanville (FR); FOURNIER, David, 60120 Bonneuil les eaux (FR); BOURE, Jean-Philippe, 60170 Ribecourt (FR); PAYEN, Corinne, 60150 Montmacq (FR)
(74) Mandataire: Saint-Gobain Recherche
(86) Numéro de dépôt international: PCT/FR2013/051074
(87) Numéro de publication internationale: WO 2013/175101

(56) Documents cités:
- EP-A1- 2 153 989
- EP-A1- 2 399 875
- WO-A1-2007/093828
- WO-A1-2010/133790
- WO-A1-2012/043816
- WO-A2-2006/102049
- US-A1- 2001 046 595
- US-A1- 2008 102 280
- US-A1- 2008 254 302
- US-A1- 2008 268 204
- US-A1- 2009 087 669
- US-A1- 2012 052 274
- US-A1- 2012 094 084

## Description

L'invention concerne un intercalaire plastique viscoélastique destiné à être incorporé entre deux feuilles de verre pour former un vitrage feuilleté ayant des propriétés d'amortissement vibro-acoustiques, destiné notamment à des engins de locomotion, en particulier un véhicule automobile.

Parmi toutes les qualités concourant au confort dans les moyens de transport modernes comme les trains et les automobiles, le silence est devenu déterminant.

Le confort acoustique a été amélioré depuis plusieurs années maintenant, en traitant les bruits, tels que les bruits du moteur, de roulement ou de suspension, et cela à leur origine ou au cours de leur propagation aérienne ou dans les solides, au moyen par exemple de revêtements absorbants, de pièce de liaison en élastomère.

Les formes des véhicules ont été également modifiées pour améliorer la pénétration dans l'air et diminuer les turbulences qui sont elles-mêmes sources de bruit.

Et depuis quelques années, on s'est penché sur le rôle que pouvaient jouer les vitrages dans l'amélioration du confort acoustique, en particulier des vitrages feuilletés comportant des films intercalaires plastiques. Les vitrages feuilletés présentent en outre d'autres avantages tels que supprimer le risque de projection de fragments en cas de casse brutale, constituer un retardateur d'effraction.

Il a été mis en évidence que l'utilisation de films plastiques standards dans des vitrages feuilletés ne convenait pas dans l'amélioration du confort acoustique. Il a alors été développé des films plastiques spécifiques qui présentaient des propriétés d'amortissement permettant une amélioration du confort acoustique.

Par ailleurs, dans les pare-brise existants, l'épaisseur de la feuille de verre destinée à être tournée vers l'extérieur du véhicule est en général de 2,1 mm et l'épaisseur de la feuille de verre destinée à être tournée vers l'intérieur du véhicule est en général de 1,6 mm. Toutefois, la tendance est à l'allègement des véhicules automobiles afin de diminuer leur consommation et le rejet de CO₂ induit. Un moyen est de proposer des vitrages automobiles plus légers. Une solution pour diminuer le poids des vitrages est de diminuer l'épaisseur des feuilles de verre. Toutefois, cette diminution d'épaisseur entraîne une dégradation des propriétés acoustiques du vitrage feuilleté. US 2012/094084 A1 décrit un intercalaire destiné à être incorporé dans un vitrage feuilleté qui permet d'obtenir un vitrage plus mince et plus économique qui possède également les propriétés de durabilité et d'insonorisation associées aux vitrages plus épais et plus lourds.

Il y a donc un besoin pour un intercalaire plastique viscoélastique destiné à être incorporé entre deux feuilles de verre pour former un vitrage feuilleté ayant des propriétés d'amortissement vibro-acoustiques, qui permette une diminution de l'épaisseur des feuilles de verre sans dégradation des propriétés d'amortissement vibro-acoustiques.

Pour cela, l'invention propose un intercalaire plastique viscoélastique destiné à être incorporé entre deux feuilles de verre pour former un vitrage feuilleté ayant des propriétés d'amortissement vibro-acoustiques, l'intercalaire comprenant au moins une couche en matériau plastique viscoélastique aux propriétés d'amortissement vibro-acoustique, l'intercalaire étant tel que la fréquence de résonance f₂ du deuxième mode de résonance d'un barreau de vitrage feuilleté de surface 25 mm × 300 mm composé de deux feuilles de verre d'épaisseur 2,1 mm chacune entre lesquelles est incorporé l'intercalaire, déterminée par un mesurage de l'impédance mécanique (MIM) à 20°C selon la norme ISO 16940, est comprise entre 760 Hz et 1000 Hz et le facteur de perte η₂ du deuxième mode de résonance du même barreau, déterminé par MIM dans les mêmes conditions, est supérieur ou égal à 0,25.

Selon l'invention, la couche est à base de polyvinylbutyral et de plastifiant.

Selon une autre particularité, la fréquence de résonance f₂ est comprise entre 800 et 900 Hz, de préférence entre 800 Hz et 850 Hz.

Selon une autre particularité, le facteur de perte η₂ est supérieur à 0,30.

Selon l'invention, l'intercalaire comprend en outre deux couches externes en PVB standard, la couche étant entre les deux couches externes.

Selon une autre particularité, le mesurage de l'impédance mécanique est réalisé au moins 1 mois après assemblage du barreau de vitrage feuilleté, le barreau de vitrage feuilleté ayant lui-même été assemblé au moins 1 mois après la fabrication de l'intercalaire.

L'invention concerne également un vitrage comprenant :
- une feuille de verre d'épaisseur comprise entre 0,5 mm et 2,6 mm,
- une feuille de verre d'épaisseur comprise entre 0,5 mm et 1,6 mm,
- un intercalaire décrit plus haut, l'intercalaire étant entre les feuilles de verre,
dans lequel l'épaisseur totale des feuilles de verre est strictement inférieure à 3,7 mm.

L'invention concerne également un véhicule automobile comprenant un vitrage décrit ci-dessus, la feuille de verre d'épaisseur comprise entre 0,5 mm et 2,6 mm étant tournée vers l'extérieur du véhicule et la feuille de verre d'épaisseur comprise entre 0,5 mm et 1,6 mm étant tournée vers l'intérieur du véhicule.

L'invention concerne également une utilisation du vitrage décrit plus haut comme pare-brise de véhicule automobile.

D'autres caractéristiques et avantages de l'invention vont à présent être décrits en regard des dessins sur lesquels :
- La figure 1 représente une courbe de l'isolement acoustique en fonction de la fréquence, mesuré sur trois pare-brise ;
- La figure 2 représente une vue en coupe d'un vitrage selon l'invention.

L'invention se rapporte à un intercalaire plastique viscoélastique destiné à être incorporé entre deux feuilles de verre pour former un vitrage feuilleté ayant des propriétés d'amortissement vibro-acoustiques. L'intercalaire comprend au moins une couche en matériau plastique viscoélastique avec des propriétés d'amortissement vibro-acoustique.

L'intercalaire est tel que la fréquence de résonance f₂ du deuxième mode de résonance d'un barreau de vitrage feuilleté de surface 25 mm × 300 mm composé de deux feuilles de verre d'épaisseur 2,1 mm chacune entre lesquelles est incorporé l'intercalaire, déterminée par un mesurage de l'impédance mécanique (MIM) à 20°C selon la norme ISO 16940 (avec une seule différence concernant l'épaisseur des feuilles de verre du barreau qui est de 2,1 mm au lieu de 4 mm), est comprise entre 760 Hz et 1000 Hz et le facteur de perte η₂ du deuxième mode de résonance du même barreau, déterminé par MIM dans les mêmes conditions, est supérieur ou égal à 0,25.

Les inventeurs ont mis en évidence, comme on le verra plus loin, qu'un intercalaire comprenant ces caractéristiques permet d'obtenir un vitrage feuilleté aminci aux performances acoustiques équivalentes, voire supérieures, à celles d'un vitrage feuilleté avec des épaisseurs de verre classiques incorporant un intercalaire à propriétés acoustiques améliorées connu.

L'intercalaire selon l'invention est destiné à être incorporé entre deux feuilles de verre pour former un vitrage feuilleté.

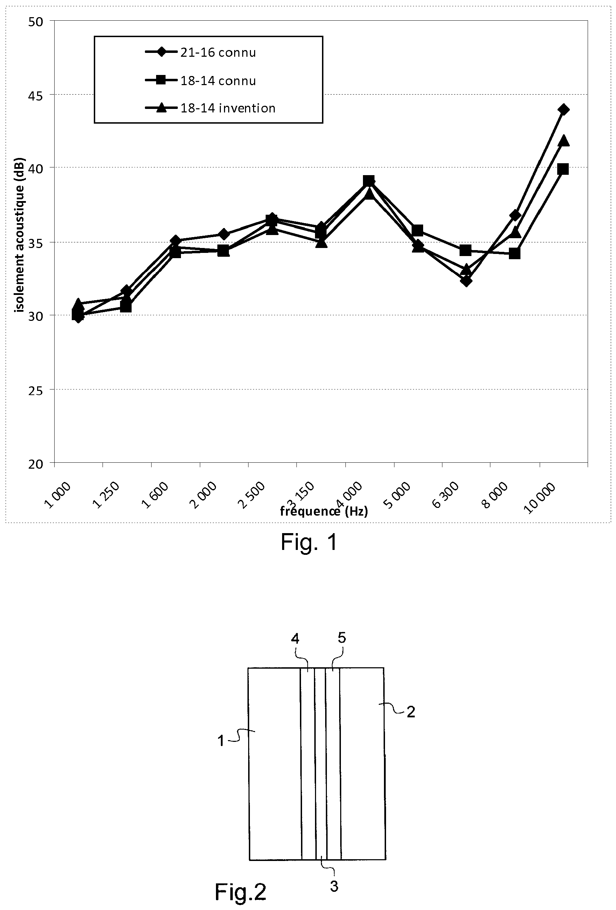

La figure 2 représente une vue en coupe d'un vitrage selon l'invention.

Le vitrage comprend deux feuilles de verre 1, 2 entre lesquelles est inséré l'intercalaire selon l'invention. La solidarisation de l'intercalaire aux feuilles de verre est réalisée par des moyens connus, par exemple par empilement des feuilles de verre et de l'intercalaire et par passage de l'ensemble en autoclave.

La feuille de verre 1 du vitrage est destinée à être tournée vers l'extérieur du véhicule tandis que la feuille de verre 2 est destinée à être tournée vers l'intérieur du véhicule. La feuille de verre 1 est de préférence plus épaisse que la feuille de verre 2 de façon à ce que le vitrage permette une meilleure protection contre les attaques extérieures (intempéries, projection de gravillons, etc...). En effet, plus le verre est épais, plus il est résistant mécaniquement. Toutefois, plus le verre est épais, plus il est lourd. Il faut donc trouver un compromis entre la résistance mécanique et le poids du vitrage. Ainsi, l'épaisseur de la feuille de verre 1 est par exemple comprise entre 0,5 mm et 2,6 mm, de préférence entre 1,4 et 2,0 mm et l'épaisseur de la feuille de verre 2 est par exemple comprise entre 0,5 mm et 1,6 mm, de préférence entre 1,1 et 1,5 mm.

Dans les vitrages existants, l'épaisseur de la feuille de verre 1 est en général de 2,1 mm et l'épaisseur de la feuille de verre 2 est en général de 1,6 mm, soit une épaisseur totale de verre de 3,7 mm.

Le vitrage selon la présente invention comprend une épaisseur totale de verre strictement inférieure à 3,7 mm, de préférence inférieure ou égale à 3,2 mm.

De préférence, selon l'invention, l'épaisseur de la feuille de verre 1 est de 1,8 mm et l'épaisseur de la feuille de verre 2 est de 1,4 mm afin de limiter le poids du vitrage, ce qui permet de réduire la consommation en carburant d'un véhicule équipé d'un tel vitrage. Cela permet également de manipuler plus facilement le vitrage et d'économiser de la matière.

Le vitrage selon l'invention peut également avoir une feuille de verre 1 d'épaisseur 1,6 mm et une feuille de verre 2 d'épaisseur 1,2 mm, ou une feuille de verre 1 d'épaisseur 1,4 mm et une feuille de verre 2 d'épaisseur 1,1 mm.

L'intercalaire est constitué d'au moins une couche 3 en plastique viscoélastique aux propriétés d'amortissement vibro-acoustique. Elle est à base de polyvinylbutyral et de plastifiant. Le taux et la nature du plastifiant et le degré d'acétalisation du polyvinylbutyral permettent de jouer de façon connue sur la rigidité d'un composant à base de polyvinylbutyral et de plastifiant.

Selon l'invention, comme illustré en figure 2, l'intercalaire comprend également deux couches 4, 5, dites couches externes, entre lesquelles est insérée la couche 3.

Les couches externes 4, 5 sont en PVB standard. La couche 3 est moins rigide que les couches externes 4, 5 afin de vibrer correctement pour assurer l'amortissement acoustique souhaité.

En variante, l'intercalaire peut comporter au moins deux couches en plastique viscoélastique aux propriétés d'amortissement vibro-acoustique, entourées de couches en PVB standard.

Les caractéristiques acoustiques de l'intercalaire sont déterminées par mesurage de l'impédance mécanique (MIM) à 20°C selon la norme ISO 16940 d'un barreau de vitrage feuilleté de surface 25 mm × 300 mm composé de deux feuilles de verre d'épaisseur 2,1 mm (et non de 4 mm comme préconisé dans la norme ISO 16940) chacune entre lesquelles est incorporé un intercalaire selon l'invention, c'est-à-dire un intercalaire comprenant au moins une couche en plastique viscoélastique aux propriétés d'amortissement vibro-acoustique.

Le MIM permet de déterminer des fréquences de résonance et des facteurs de perte des différents modes de résonance du barreau de vitrage feuilleté.

L'intercalaire est selon l'invention si la fréquence de résonance f₂ du deuxième mode de résonance du barreau de vitrage feuilleté déterminé par MIM est comprise entre 760 Hz et 1000 Hz et le facteur de perte η₂ du deuxième mode de résonance du barreau de vitrage feuilleté déterminé par MIM est supérieur ou égal à 0,25.

De préférence, la fréquence de résonance f₂ est comprise entre 800 Hz et 900 Hz, ce qui permet d'avoir des performances acoustiques améliorées en dégradant moins le niveau d'affaiblissement du vitrage feuilleté avant la fréquence critique. De façon encore préférée, la fréquence de résonance f₂ est comprise entre 800 Hz et 850 Hz, ce qui permet d'avoir des performances acoustiques encore améliorées en dégradant encore moins le niveau d'affaiblissement du vitrage feuilleté avant la fréquence critique.

De préférence, le facteur de perte η₂ est supérieur à 0,30, ce qui permet d'avoir des performances acoustiques améliorées en améliorant l'amortissement acoustique.

Le mesurage de l'impédance mécanique (MIM) est réalisé de préférence au moins 1 mois après assemblage du barreau de vitrage feuilleté, le barreau de vitrage feuilleté ayant lui-même été assemblé au moins 1 mois après la fabrication de l'intercalaire. Cela permet d'être sûr que l'intercalaire et le vitrage feuilleté ont atteint des états stables et donc de déterminer des valeurs fiables.

La figure 1 représente une courbe de l'isolement acoustique en fonction de la fréquence, mesuré sur trois pare-brise. L'isolement acoustique d'un vitrage rend compte des performances acoustiques qui pourront être constatées sur un véhicule équipé dudit vitrage.

Ainsi, un premier pare-brise (21-16 connu) comprend :
- deux feuilles de verre d'épaisseurs respectives 2,1 mm et 1,6 mm, et
- un intercalaire comprenant deux couches externes en PVB standard et une couche centrale en plastique viscoélastique aux propriétés d'amortissement vibro-acoustique, l'intercalaire ayant une fréquence de résonance f₂ de 675 Hz (± 15 Hz) et un facteur de perte η₂ égal à 0,35 (± 0,03).

Le premier pare-brise correspond à un pare-brise classique avec un intercalaire aux propriétés d'amortissement acoustique connu.

La courbe d'isolement acoustique (représentée par des losanges) du premier pare-brise montre un creux vers 6500 Hz.

Un deuxième pare-brise (18-14 connu) comprend :
- deux feuilles de verre d'épaisseurs respectives 1,8 mm et 1,4 mm, et
- un intercalaire comprenant deux couches externes en PVB standard et une couche centrale en plastique viscoélastique aux propriétés d'amortissement vibro-acoustique, l'intercalaire ayant une fréquence de résonance f₂ de 675 Hz (± 15 Hz) et un facteur de perte η₂ égal à 0,35 (± 0,03).

Le deuxième pare-brise correspond à un pare-brise aminci avec un intercalaire identique à celui du premier pare-brise.

La courbe d'isolement acoustique (représentée par des carrés) du deuxième pare-brise montre un comportement similaire à celle du premier pare-brise jusque vers 5000 Hz, mais un creux décalé vers les hautes fréquences, vers 8000 Hz. Ce décalage du creux est très gênant car cela implique que ce pare-brise laisse passer des bruits aériens à des fréquences aigües qui sont gênantes pour l'oreille humaine.

Un troisième pare-brise (18-14 invention) comprend :
- deux feuilles de verre d'épaisseurs respectives 1,8 mm et 1,4 mm, et
- un intercalaire comprenant deux couches externes en PVB standard et une couche centrale en plastique viscoélastique aux propriétés d'amortissement vibro-acoustique, l'intercalaire ayant une fréquence de résonance f₂ de 800 Hz (± 15 Hz) et un facteur de perte η₂ égal à 0,30 (± 0,03).

Le troisième pare-brise correspond à un pare-brise aminci avec un intercalaire selon l'invention.

La courbe d'isolement acoustique (représentée par des triangles) du troisième pare-brise montre un comportement similaire à celle du premier pare-brise, avec un creux recentré vers 6500 Hz et des valeurs d'isolement acoustique similaires à celles du premier pare-brise.

Le pare-brise avec un intercalaire selon l'invention permet donc bien de compenser la dégradation acoustique liée à l'amincissement du vitrage.

Le vitrage feuilleté selon l'invention peut être utilisé comme pare-brise de véhicule automobile. Dans ce cas-là, il satisfait bien entendu à toutes les conditions du règlement No. 43 des Nations Unies (dit règlement R43) de résistance aux chocs durs pour assurer sa résistance mécanique. Pour ce faire, dans le cas d'un intercalaire comprenant deux couches externes en PVB standard, l'épaisseur de ces couches externes 4, 5 est par exemple adaptée de façon connue, par exemple par la demande de brevet FR 09 52567.

## Revendications

1. Intercalaire plastique viscoélastique destiné à être incorporé entre deux feuilles de verre pour former un vitrage feuilleté ayant des propriétés d'amortissement vibro-acoustiques, l'intercalaire comprenant au moins une couche (3) en matériau plastique viscoélastique aux propriétés d'amortissement vibro-acoustique, la couche (3) étant à base de polyvinylbutyral et de plastifiant, ainsi que deux couches externes (4, 5) en PVB standard, la couche (3) étant entre les deux couches externes (4, 5) et étant moins rigide que les deux couches externes (4, 5), l'intercalaire étant tel que la fréquence de résonance f₂ du deuxième mode de résonance d'un barreau de vitrage feuilleté de surface 25 mm × 300 mm composé de deux feuilles de verre d'épaisseur 2,1 mm chacune entre lesquelles est incorporé l'intercalaire, déterminée par un mesurage de l'impédance mécanique (MIM) à 20°C selon la norme ISO 16940, est comprise entre 760 Hz et 1000 Hz et le facteur de perte η₂ du deuxième mode de résonance du même barreau, déterminé par MIM dans les mêmes conditions, est supérieur ou égal à 0,25.

2. Intercalaire selon la revendication 1, dans lequel la fréquence de résonance f₂ est comprise entre 800 et 900 Hz, de préférence entre 800 Hz et 850 Hz.

3. Intercalaire selon la revendication 1 ou 2, dans lequel le facteur de perte η₂ est supérieur à 0,30.

4. Intercalaire selon l'une des revendications 1 à 3, dans lequel le mesurage de l'impédance mécanique est réalisé au moins 1 mois après assemblage du barreau de vitrage feuilleté, le barreau de vitrage feuilleté ayant lui-même été assemblé au moins 1 mois après la fabrication de l'intercalaire.

5. Vitrage comprenant :
- une feuille de verre (1) d'épaisseur comprise entre 0,5 mm et 2,6 mm,
- une feuille de verre (2) d'épaisseur comprise entre 0,5 mm et 1,6 mm,
- un intercalaire selon l'une quelconque des revendications 1 à 4, l'intercalaire étant entre les feuilles de verre (1, 2),
dans lequel l'épaisseur totale des feuilles de verre (1, 2) est strictement inférieure à 3,7 mm.

6. Véhicule automobile comprenant un vitrage selon la revendication 5, la feuille de verre (1) d'épaisseur comprise entre 0,5 mm et 2,6 mm étant tournée vers l'extérieur du véhicule et la feuille de verre (2) d'épaisseur comprise entre 0,5 mm et 1,6 mm étant tournée vers l'intérieur du véhicule.

7. Utilisation du vitrage selon la revendication 5 comme pare-brise de véhicule automobile.

## Patentansprüche

1. Zwischenlage aus viskoelastischem Kunststoff, die dazu bestimmt ist, zwischen zwei Glasscheiben zum Ausbilden einer Verbundverglasung eingebaut zu werden, die vibroakustische Dämpfungseigenschaften aufweist, die Zwischenlage umfassend mindestens eine Schicht (3) aus viskoelastischem Kunststoffmaterial mit vibroakustischen Dämpfungseigenschaften, wobei die Schicht (3) auf Basis von Polyvinylbutyral und Weichmacher ist, sowie zwei Außenschichten (4, 5) aus Standard-PVB, wobei die Schicht (3) zwischen den zwei Außenschichten (4, 5) ist und weniger steif als die zwei Außenschichten (4, 5) ist, wobei die Zwischenlage so beschaffen ist, dass die Resonanzfrequenz f₂ des zweiten Resonanzmodus eines Verbundglasstabes mit einer Oberfläche von 25 mm × 300 mm, der aus zwei Glasscheiben mit einer Dicke von jeweils 2,1 mm besteht, zwischen denen die Zwischenlage eingebaut ist, bestimmt durch eine Messung der mechanischen Impedanz (MIM) bei 20 °C gemäß der ISO-Norm 16940, zwischen 760 Hz und 1000 Hz liegt und der Verlustfaktor η₂ des zweiten Resonanzmodus desselben Stabes, bestimmt durch MIM bei den gleichen Bedingungen, größer als oder gleich 0,25 ist.

2. Zwischenlage nach Anspruch 1, wobei die Resonanzfrequenz f₂ zwischen 800 und 900 Hz, vorzugsweise zwischen 800 Hz und 850 Hz liegt.

3. Zwischenlage nach Anspruch 1 oder 2, wobei der Verlustfaktor η₂ größer als 0,30 ist.

4. Zwischenlage nach einem der Ansprüche 1 bis 3, wobei die Messung der mechanischen Impedanz mindestens 1 Monat nach einem Zusammenbau des Verbundverglasungsstabes durchgeführt wird, wobei der Verbundverglasungsstab selbst mindestens 1 Monat nach der Herstellung der Zwischenlage zusammengebaut wurde.

5. Verglasung, umfassend:
- eine Glasscheibe (1) mit einer Dicke zwischen 0,5 mm und 2,6 mm,
- eine Glasscheibe (2) mit einer Dicke zwischen 0,5 mm und 1,6 mm,
- eine Zwischenlage nach einem der Ansprüche 1 bis 4, wobei die Zwischenlage zwischen den Glasscheiben (1, 2) liegt,
wobei die Gesamtdicke der Glasscheiben (1, 2) strikt weniger als 3,7 mm beträgt.

6. Kraftfahrzeug, umfassend eine Verglasung nach Anspruch 5, wobei die Glasscheibe (1) mit einer Dicke zwischen 0,5 mm und 2,6 mm der Außenseite des Fahrzeugs zugewandt ist und die Glasscheibe (2) mit einer Dicke zwischen 0,5 mm und 1,6 mm dem Inneren des Fahrzeugs zugewandt ist.

7. Verwendung der Verglasung nach Anspruch 5 als Windschutzscheibe für ein Kraftfahrzeug.

## Claims

1. Viscoelastic plastic interlayer intended to be incorporated between two glass sheets to form a laminated glazing with vibro-acoustic damping properties, the interlayer comprising at least one layer (3) made of viscoelastic plastic with vibro-acoustic damping properties, the layer (3) being on polyvinyl butyral and plasticizer, the layer (3) comprising two outer layers (4, 5) made of standard PVB, the layer (3) being between the two outer layers (4, 5), the interlayer being such that the resonant frequency f₂ of the second resonance mode of a laminated glazing bar with a surface area of 25 mm × 300 mm composed of two glass sheets each 2.1 mm thick, between which is incorporated the interlayer, determined by measuring the mechanical impedance (MIM) at 20°C according to standard ISO 16940, is between 760 Hz and 1000 Hz and the loss factor η₂ of the second resonance mode of the same bar, determined by MIM under the same conditions, is greater than or equal to 0.25.

2. Interlayer according to Claim 1, in which the resonant frequency f₂ is between 800 and 900 Hz and preferably between 800 Hz and 850 Hz.

3. Interlayer according to one of Claims 1 to 2, in which the loss factor η₂ is greater than 0.30.

4. Interlayer according to one of Claims 1 to 3, in which the measurement of the mechanical impedance is performed at least one month after assembly of the laminated glazing bar, the laminated glazing bar having itself been assembled at least one month after the manufacture of the interlayer.

5. Glazing comprising:
- a glass sheet (1) between 0.5 mm and 2.6 mm thick,
- a glass sheet (2) between 0.5 mm and 1.6 mm thick,
- an interlayer according to any one of Claims 1 to 4, the interlayer being between the glass sheets (1, 2),
in which the total thickness of the glass sheets (1, 2) is strictly less than 3.7 mm.

6. Motor vehicle comprising glazing according to Claim 5, the glass sheet (1) between 0.5 mm and 2.6 mm thick being turned facing the exterior of the vehicle and the glass sheet (2) between 0.5 mm and 1.6 mm thick being turned facing the interior of the vehicle.

7. Use of the glazing according to Claim 7 as a motor vehicle windscreen.
